# EUROPÄISCHE PATENTSCHRIFT

(11) **EP 3 966 532 B1**
(45) Veröffentlichungstag und Bekanntmachung des Hinweises auf die Patenterteilung: **30.10.2024**
(21) Anmeldenummer: 20725154.7
(22) Anmeldetag: 08.05.2020
(51) Int. Cl.: G01F 1/20

(54) **DURCHFLUSSMESSVORRICHTUNG UND VERFAHREN ZUM MESSEN EINES DURCHFLUSSES**
FLOW MEASURING DEVICE AND METHOD FOR MEASURING A FLOW
DISPOSITIF DE MESURE DE DÉBIT ET PROCÉDÉ DE MESURE D'UN DÉBIT

(30) Priorität: 10.05.2019 DE 102019206813
(43) Veröffentlichungstag der Anmeldung: 16.03.2022
(73) Patentinhaber: Fraunhofer-Gesellschaft zur Förderung der angewandten Forschung e.V., 80686 München (DE)
(72) Erfinder: RADLER, Philipp, 70569 Stuttgart (DE); LANGEJÜRGEN, Jens, 70569 Stuttgart (DE); LEBHARDT, Philipp, 70569 Stuttgart (DE); RINGKAMP, Jan, 70569 Stuttgart (DE)
(74) Vertreter: Pfenning, Meinig & Partner mbB
(86) Internationale Anmeldenummer: PCT/EP2020/062837
(87) Internationale Veröffentlichungsnummer: WO 2020/229337

(56) Entgegenhaltungen:
- WO-A2-01/61281
- DE-B- 1 125 688
- JP-A- 2008 020 278
- US-A- 2 896 450

## Beschreibung

Die Erfindung betrifft eine Durchflussmessvorrichtung mit einem Messelement, wobei das Messelement einen Strömungskanal aufweist, in dem ein Sensorelement angeordnet ist. Dabei ist das Sensorelement durch eine Antriebsvorrichtung zur Rotation um eine Drehachse antreibbar. Die erfindungsgemäße Durchflussmessvorrichtung weist außerdem eine Kraftmessvorrichtung auf, mit der eine Kraft auf das Sensorelement oder eine Verschiebung des Sensorelementes gegen eine Gegenkraft oder eine durch das Sensorelement verursachte Kraft messbar ist.

Die Möglichkeit der exakten, hochdynamischen und robusten Flussmessung in Gasen und Flüssigkeiten ist für zahlreiche industrielle Prozesse genauso wichtig wie beispielsweise bei der Beatmung von Patienten in medizinischem Kontext. Bei der Auswahl des jeweils eingesetzten Sensors muss zwischen meist konkurrierenden Anforderungen wie Genauigkeit, Dynamik, Messbereich und nicht zuletzt den Kosten abgewogen werden. Bestehende Sensortechnologien werden den hohen Anforderungen in bestimmten Anwendungsfeldern noch immer nicht ausreichend gerecht. Die Probleme werden vor allem bei der Messung von Gasen deutlich, die mit Feuchtigkeit gesättigt sind und somit die jeweiligen Sensoren durch eine Tröpfchenbildung in der Messung stark beeinträchtigen oder diese sogar vollständig unbrauchbar machen.

Zur Bestimmung von Gasflüssen sind zahlreiche Verfahren etabliert, die unterschiedlichste physikalische Effekte ausnutzen. Hierzu zählen beispielsweise die Messung von flussabhängigen Differenzdrücken, die Ausnutzung des Dopplereffekts oder der Laufzeitmessung von Schall, sowie das Prinzip der Anemometrie.

Die WO 01/6128 1 A2 beschreibt ein Verfahren und eine Vorrichtung zum Messen einer Massenflussrate eines fluidischen Materials mit einer rotatorisch oszillierenden Sonde, die an einem ihrer Enden an einer Halterung angeordnet ist und eingerichtet ist, sich in einen Fluidstrom zu erstrecken. Das um die Sonde fließende Fluid interagiert mit der Sonde um eine oszillierende Magnuskraft zu bewirken. Die in dem Strömungsvolumen angeordnete Sonde wird durch einen außerhalb des Strömungsvolumens angeordneten Antrieb angetrieben, mit dem sie durch eine Wand des Strömungskanals hindurch verbunden ist.

Die Druckschrift JP 2008 020278 A beschreibt eine Vorrichtung zur Durchflussmessung, bei der das obere Ende eines Drehkörpers an einem Motor befestigt ist, um drehend angetrieben zu werden. Am unteren Ende des Drehkörpers ist über ein Lager ein Spannungssensor angebracht. Der Rotationskörper ist orthogonal zum Strömungsweg eines Fluids vorgesehen. Der beim Fließen des Fluids im rotierenden Körper auftretende Auftrieb wird durch den Spannungssensor erfasst. Eine Strömung wird auf der Grundlage von voreingestellten kalibrierten Werten bezüglich Auftrieb und Strömung umgerechnet, um die Strömung zu messen.

Die Druckschrift US 2 896 450 A beschreibt eine Vorrichtung zur Massenflussmessung mit einem rotierender Zylinder der in einem Kanal angeordnet ist. Der rotierende Zylinder wird von einem Joch getragen, das fest an einer an den Wänden des Kanals angebrachten Querstange befestigt ist. Das Joch trägt einen Querbalken, auf dem ein Stator eines Synchronmotors gelagert ist, wobei der rotierende Zylinder den Rotor des Synchronmotors bildet. Der Zylinder ist mit Hilfe von Lagern frei drehbar auf dem Querbalken gelagert. Eine Auslenkung des rotierenden Zylinders kann mit am Joch angeordneten Dehnungsmessstreifen gemessen werden.

Aufgabe der vorliegenden Erfindung ist es, eine Durchflussmessvorrichtung und ein entsprechendes Verfahren anzugeben, die schnelle und genaue Messungen eines momentanen Fluidstroms ermöglichen, robust sind gegenüber korrosiven oder aggressiven Fluiden, robust sind gegen kondensierende Feuchte und besonders vorteilhaft kostengünstig herstellbar sind.

Die Aufgabe wird gelöst durch die Durchflussmessvorrichtung nach Anspruch 1 und das Verfahren zum Messen eines Durchflusses nach Anspruch 11. Die jeweiligen abhängigen Ansprüche geben vorteilhafte Weiterbildungen der erfindungsgemäßen Durchflussmessvorrichtung und des erfindungsgemäßen Verfahrens an.

Erfindungsgemäß wird eine Durchflussmessvorrichtung gemäß Anspruch 1 angegeben, die ein Messelement, eine Antriebsvorrichtung und eine Kraftmessvorrichtung aufweist.

Das Messelement weist dabei einen Strömungskanal mit einer zusammenhängenden Einlassöffnung und einer zusammenhängenden Auslassöffnung auf. Vorzugsweise weist der Strömungskanal genau eine zusammenhängende Einlassöffnung und genau eine zusammenhängende Auslassöffnung auf. Dass die Einlassöffnung und die Auslassöffnung zusammenhängend sind, bedeutet dabei, dass eine Öffnungsfläche dieser Öffnungen eine zusammenhängende, nicht durchbrochene Fläche ist. Diese Öffnungsfläche kann beispielsweise kreisförmig, elliptisch, rechteckig oder quadratisch sein. Vorteilhaft kann der Strömungskanal also eine Einlassöffnung und eine Auslassöffnung haben, die eine entsprechende Öffnungsfläche haben.

Der Strömungskanal weist dabei eine ein Strömungsvolumen umgebende zusammenhängende Oberfläche auf. Das Strömungsvolumen ist also das von der Oberfläche des Strömungskanals umgebene oder umfasste Volumen. Die Oberfläche des Strömungskanals soll erfindungsgemäß nur durch die Einlassöffnung und die Auslassöffnung unterbrochen sein. Die Oberfläche des Strömungskanals weist also die Einlassöffnung und die Auslassöffnung auf, darüber hinaus aber vorteilhafterweise keine weiteren Öffnungen.

Das Messelement weist außerdem ein in dem Strömungsvolumen angeordnetes Sensorelement auf. Das Sensorelement ist erfindungsgemäß durch die Antriebsvorrichtung zu einer Rotation um eine Drehachse antreibbar. Die Drehachse kann vorteilhaft eine Symmetrieachse des Sensorelementes sein.

Mit der Kraftmessvorrichtung ist dann eine Kraft auf das Sensorelement, eine von einer Kraft auf das Sensorelement abhängige Regelungsgröße, eine Verschiebung des Sensorelementes gegen eine Gegenkraft, eine von einer Verschiebung des Sensorelementes gegen eine Gegenkraft abhängige Regelungsgröße, eine durch das Sensorelement verursachte Kraft oder eine von einer durch das Sensorelement verursachten Kraft abhängige Regelungsgröße messbar. Die Kraft bzw. die Verschiebung wird dabei durch die Wechselwirkung des Sensorelementes mit einem in dem Strömungskanal strömenden Fluid bewirkt. Aus der gemessenen Kraft auf das Sensorelement oder der Verschiebung des Sensorelementes gegen die Gegenkraft oder die durch das Sensorelement verursachte Kraft ist daher auf den Durchfluss durch den Strömungskanal schließbar. Im Allgemeinen wird die Kraft auf das Sensorelement oder die durch das Sensorelement verursachte Kraft oder die Kraft, gegen die das Sensorelement verschoben wird, eine vektorielle Überlagerung mehrerer Kräfte sein, nämlich solcher, die parallel zur Strömungsrichtung wirken und solche, die senkrecht zur Strömungsrichtung wirken. Hinzu können externe Kräfte wie beispielsweise durch die Erdbeschleunigung, kommen. Die Erfindung kann unter Verwendung der Gesamtkraft ausgeführt werden. Bevorzugterweise ist jedoch die auf das Sensorelement wirkende Magnuskraft bestimmbar, also die in Richtung senkrecht zur Strömungsrichtung wirkende Kraft, und wird vorzugsweise zur Bestimmung des Durchflusses verwendet.

Es sei angemerkt, dass vorzugsweise dann, wenn in diesem Dokument von der Bestimmung einer Kraft gesprochen wird, es nicht notwendig erforderlich ist, dass der Wert der Kraft selbst tatsächlich ermittelt wird. Es soll vielmehr vorzugsweise ausreichend sein, dass zumindest ein von der entsprechenden Kraft abhängiger Wert bestimmt wird, aus dem die Bestimmung des Durchflusses möglich ist. Ein solcher Wert kann zum Beispiel eine Regelungsgröße sein, mit der Elektromagneten gesteuert werden können, die vorteilhaft das Sensorelement halten und/oder zur Rotation anregen.

Vorteilhafterweise ist die Durchflussmessvorrichtung geeignet, um den Durchfluss eines Fluids, also beispielsweise einer Flüssigkeit oder eines Gases zu messen.

Als Durchfluss kann der Volumendurchfluss durch den Strömungskanal und/oder der Massendurchfluss durch den Strömungskanal bestimmt werden. Aus der gemessenen Kraft auf das Sensorelement oder der Verschiebung des Sensorelementes gegen eine Gegenkraft oder der durch das Sensorelement verursachten Kraft kann auf die Fließgeschwindigkeit geschlossen werden. Der Volumendurchfluss ergibt sich dann als Querschnittsfläche des Strömungskanals multipliziert mit der Geschwindigkeit. Als SI-Einheit kann hier beispielsweise m³/s angegeben werden. Ein Massendurchfluss beschreibt eine Masse pro Zeit, die eine Querschnittsfläche des Strömungskanals durchfließt. Sie kann beispielsweise in kg/h angegeben werden.

In einer vorteilhaften Ausgestaltung der Erfindung kann das Sensorelement mittels Magnetkraft im Strömungskanal gehalten werden oder haltbar sein. Dabei kann vorteilhaft einer oder mehrere Magneten, welche die Magnetkraft erzeugen, außerhalb des Strömungskanals, also außerhalb des Strömungsvolumens, angeordnet sein. Auf diese Weise ist im Inneren des Strömungskanals keine Mechanik erforderlich, was zu einer sehr genauen und fehlerfreien Messung führt.

Erfindungsgemäß weist das Sensorelement zumindest einen magnetischen oder magnetisierten Bereich auf.

Es kann dann der zumindest eine magnetische oder magnetisierte Bereich des Sensorelements in einem Bereich angeordnet sein, in dem durch die zumindest eine Magnetanordnung ein Magnetfeld mit einer solchen Feldstärke erzeugbar ist oder erzeugt wird, dass das Sensorelement durch das Magnetfeld gehalten wird. Dabei wird vorzugsweise das Sensorelement so gehalten, dass es eine innere Oberfläche des Strömungskanals nicht berührt.

In einer vorteilhaften Ausgestaltung der Erfindung kann die Durchflussmessvorrichtung zumindest einen externen Kraft- und/oder Beschleunigungssensor aufweisen. Dieser kann zum Beispiel Teil des Messelements sein. Die Durchflussmessvorrichtung kann dann eingerichtet sein, aus einer durch die Kraftmessvorrichtung gemessenen Gesamtkraft, die ggf. auch aus der Verschiebung bestimmbar ist, mittels einer durch den externen Kraft- und/oder Beschleunigungssensor gemessenen Kraft oder Beschleunigung einen Betrag und/oder eine Richtung einer auf das Sensorelement wirkenden Magnuskraft zu bestimmen. Die Magnuskraft ist dabei jene Kraftkomponente, die dadurch auf das Sensorelement wirkt, dass sich das Fluid im Strömungskanal an der Oberfläche des rotierenden Sensorelementes vorbei bewegt. Durch eine Rotation des Sensorelementes wird das Fluid auf einer Seite des Sensorelements beschleunigt und auf der anderen abgebremst. Dadurch erzeugt der Bernoulli-Effekt eine Kraft in Richtung der Seite, wo das Fluid beschleunigt wird, die sog. Magnuskraft.

Werden mittels des externen Kraft- und/oder Beschleunigungssensors solche Kräfte bzw. Beschleunigungen bestimmt, die nicht durch Wechselwirkung des Sensorelementes mit dem Fluid erzeugt werden, so können diese aus der durch die Kraftmessvorrichtung gemessenen Kraft heraus gerechnet werden.

Erfindungsgemäß ist die zumindest eine Magnetanordnung außerhalb des Strömungskanals angeordnet. Auf diese Weise kann die Zahl der Bauteile im Inneren des Strömungskanals gering gehalten werden, was insbesondere in medizinischen Anwendungen aus Gründen der Sterilität vorteilhaft ist oder dann, wenn das Fluid die Magnetordnung angreifen oder verschmutzen könnte. Ist die zumindest eine Magnetanordnung außerhalb des Strömungskanals angeordnet, ist es darüber hinaus vorteilhaft möglich, den Strömungskanal selbst als Einwegteil zu gestalten, der in den Rest der Durchflussmessvorrichtung eingesetzt wird. Es ist dann nicht erforderlich, die Magnetanordnung auszutauschen.

Erfindungsgemäß weist die Magnetanordnung zumindest einen Elektromagneten auf.

Die Durchflussmessvorrichtung weist dann vorteilhaft eine Leistungsversorgungsvorrichtung auf, die mit dem zumindest einen Elektromagneten elektrisch und/oder elektromagnetisch verbunden ist. Mittels der Leistungsversorgungsvorrichtung ist also dem zumindest einen Elektromagneten Strom zuführbar.

In einer vorteilhaften Ausgestaltung der Erfindung kann die Durchflussmessvorrichtung zumindest zwei der Magnetanordnungen aufweisen. Diese können dann einander bezüglich einer Ebene gegenüberliegen, in der eine Strömungsachse des Strömungskanals verläuft. In dieser Ausgestaltung kann das Sensorelement auf gegenüberliegenden Seiten gehalten werden und liegt daher besonders stabil im Strömungskanal.

Die genannte Strömungsachse des Strömungskanals kann, wenn der Strömungskanal zumindest bereichsweise einen kreisförmigen Querschnitt hat, durch die Mittelpunkte der kreisförmigen Querschnitte entlang der Strömungsrichtung verlaufen. Im Fall eines nicht kreisförmigen Querschnitts des Strömungskanals kann die Strömungsachse beispielsweise durch den jeweils geometrischen Schwerpunkt der Querschnitte des Strömungskanals verlaufen.

In einer vorteilhaften Ausgestaltung der Erfindung kann die Kraftmessvorrichtung eine Regelvorrichtung sein, die eingerichtet ist, einen von der Leistungsversorgungsvorrichtung an den zumindest einen Elektromagneten abgegebenen Strom und/oder eine durch die Leistungsversorgungsvorrichtung an den zumindest einen Elektromagneten angelegte Spannung zeitabhängig so zu regeln, dass das Sensorelement in einer vorgegebenen Position festgehalten wird. Die Regelvorrichtung kann dann eingerichtet sein, aus dem an den zumindest einen Elektromagneten abgegebenen Strom und/oder aus der an den zumindest einen Elektromagneten angelegten Spannung die Kraft auf das Sensorelement und/oder die Verschiebung des Sensorelementes und/oder die durch das Sensorelement verursachte Kraft zu bestimmen. Vorteilhaft kann dabei die Regelvorrichtung eine Positionsmessvorrichtung aufweisen, mit der eine Position des Sensorelementes bestimmbar ist. Abhängig von der durch diese bestimmte Position des Sensorelementes kann dann der genannte Strom und/oder die genannte Spannung geregelt werden. Im Einzelnen kann eine solche Regelung beispielsweise wie folgt geschehen. Es kann in einem ersten Schritt eine Auslenkung des Sensorelementes in einer oder mehreren Richtungen und/oder in einer oder mehreren Winkelrichtungen aus einer Soll-Lage bestimmt werden. Basierend auf dieser so bestimmten Auslenkung kann dann ein an den Elektromagneten abgegebener Strom und/oder ein an den Elektromagneten angelegte Spannung so verändert werden, dass das Sensorelement zurück in die Soll-Lage verschoben bzw. gedreht wird. Aus der gemessenen Auslenkung oder der Veränderung von Strom und/oder Spannung kann dann, ggf. unter Berücksichtigung von weiteren Kräften wie durch die Erdbeschleunigung oder andere externe Beschleunigungen bewirkte Kräfte oder der Strömungskraft, die Magnuskraft und die Kraft in Strömungsrichtung bestimmt werden. Aus diesen Kräften kann dann der Durchfluss bestimmt werden. Die externen Beschleunigungen können beispielsweise mit geeigneten Sensoren bestimmt werden.

In einer vorteilhaften Ausgestaltung der Erfindung kann die Regelvorrichtung eingerichtet sein, den Strom und/oder die Spannung so zu regeln, dass das Sensorelement in einem vorgegebenen Abstand zu einer Ebene festgehalten wird, in der eine Strömungsachse des Strömungskanals verläuft, und in der eine Drehachse des Sensorelementes bei Abwesenheit von Strömung im Strömungskanal liegt. Die Regelvorrichtung kann dann aus diesem Strom und/oder dieser Spannung eine auf das Sensorelement wirkende Magnuskraft als die Kraft oder als einen Anteil der Kraft auf das Sensorelement bestimmen. Es sei darauf hingewiesen, dass das Sensorelement nicht zwingend selbst auf der Strömungsachse liegen muss. Es ist auch möglich, dass beispielsweise das Sensorelement bei einem Strömungskanal mit rechteckigem Querschnitt nah an einer Seite des Strömungskanals liegt.

Erfindungsgemäß ist der Elektromagnet Teil der Antriebsvorrichtung. Besonders bevorzugt kann dieser Elektromagnet mit einem Wechselstrom so beaufschlagbar sein, dass das Sensorelement zu einer Rotation angetrieben wird. Hierbei ist es bevorzugt, wenn das Sensorelement selbst zumindest einen magnetischen oder magnetisierten Bereich aufweist, dessen Nordpol und Südpol einander bezüglich der Drehachse des Sensorelements gegenüberliegen. Der zumindest eine Elektromagnet kann einer der zumindest einen Magneten der zumindest einen Magnetanordnung sein, es kann jedoch auch ein davon unabhängiger weiterer Elektromagnet sein.

In einer vorteilhaften Ausgestaltung der Erfindung kann die Kraftmessvorrichtung zumindest einen Näherungssensor aufweisen, mit dem eine Verschiebung des Sensorelements infolge der auf das Sensorelement wirkenden Kraft messbar ist. Ein solcher Näherungssensor kann beispielsweise ein optischer, kapazitiver oder induktiver Näherungssensor sein. Bei einem optischen Näherungssensor wird die Verschiebung optisch bestimmt, bei einem kapazitiven Näherungssensor wird eine Veränderung einer Kapazität durch die Verschiebung bestimmt und bei einem induktiven Näherungssensor wird eine Veränderung einer Induktivität durch die Verschiebung bestimmt. Vorteilhafterweise kann der entsprechende Näherungssensor in einer Richtung senkrecht zur Rotationsachse des Sensorelements angeordnet sein. Bevorzugt kann der Näherungssensor in einer Richtung senkrecht zur Strömungsrichtung angeordnet sein.

Die Lage des Messelementes kann vorteilhaft auch dadurch bestimmt werden, dass der zeitliche Verlauf des Stromes und/oder der Spannung an den Elektromagneten, die vorteilhaft das Sensorelement halten und/oder in Rotation versetzen, ausgewertet wird. Diese können durch das magnetische Feld des Permanentmagneten des Messelementes in den Spulen der Elektromagneten induziert werden (Back-Electro-Magnetic-Force).

In einer vorteilhaften Ausgestaltung der Erfindung kann das Sensorelement zumindest bereichsweise zylindrisch sein und so im Strömungskanal angeordnet sein, dass seine Zylinderachse senkrecht zur Strömungsachse des Strömungskanals steht. Durch die Antriebsvorrichtung kann dann das Sensorelement um eine Zylinderachse des Sensorelementes als Drehachse antreibbar sein. Dass das Sensorelement zylindrisch ist, bedeutet hierbei vorzugsweise, dass das Sensorelement eine Form hat, so dass jeder Punkt seiner Oberfläche von einer Achse, der Zylinderachse, den gleichen Abstand hat. Vorteilhaft hat das Sensorelement zumindest bereichsweise eine Kreiszylinderform.

In einer vorteilhaften Ausgestaltung der Erfindung kann das Sensorelement an seinen beiden Enden in Richtung seiner Drehachse jeweils einen magnetischen oder magnetisierten Bereich aufweisen. Vorteilhaft kann dabei Nord- und Südpol des magnetisierten Bereiches einander bezüglich der Zylinderachse gegenüberliegen.

Vorteilhaft kann hier die Antriebsvorrichtung zwei Magnetanordnungen aufweisen, die jeweils zumindest einen Elektromagneten aufweisen. Es kann dann eine der Magnetanordnungen auf einen der magnetischen oder magnetisierten Bereiche des Sensorelementes wirken und die andere der Magnetanordnungen auf den anderen der magnetischen oder magnetisierten Bereiche. Auf diese Weise kann das Sensorelement an seinen beiden Enden gehalten werden, was eine besonders genaue Regelung ermöglicht.

In einer vorteilhaften Ausgestaltung kann jeder der magnetischen oder magnetisierten Bereiche des Sensorelementes von einer Magnetanordnung umgeben sein, die eine Anzahl an Elektromagneten gleich oder mehr als drei aufweist, wobei vorzugsweise die Elektromagneten der Magnetanordnung jeweils in im Wesentlichen gleichen Winkelabständen zueinander um die Drehachse des Sensorelementes angeordnet sind. Es kann also jeweils eine der Magnetanordnungen eine der magnetischen oder magnetisierten Bereiche des Sensorelementes umgeben. Eine ungerade Anzahl von Elektromagneten ist dabei vorteilhaft, um eine gleichförmige Rotation zu erzielen und Totpunkte zu verhindern. Bevorzugterweise liegen die Elektromagnete der Magnetanordnung jeweils in einer gemeinsamen Ebene, die besonders bevorzugt senkrecht steht auf der Drehachse des Sensorelements.

Vorteilhafterweise kann der Strömungskanal in seiner das Strömungsvolumen umgebenden Oberfläche zwei bezüglich einer Strömungsachse des Strömungskanals gegenüberliegende Vertiefungen nach außen aufweisen. Es kann dann das Sensorelement mit seinen gegenüberliegenden Enden jeweils in einer der Vertiefungen angeordnet sein. Das Sensorelement kann also beidseitig in jeweils eine der Vertiefungen eingreifen. Auf diese Weise kann das Sensorelement gegen Herausfallen geschützt sein. Darüber hinaus ist es möglich, die Elektromagneten der Magnetanordnungen jeweils um äußere Oberflächen der Vertiefungen, die also Teil der Außenoberfläche des Strömungskanals sind, herum anzuordnen. Wird das Messelement als Einwegteil oder von der restlichen Durchflussmessvorrichtung trennbares Teil ausgestaltet, so kann es mit diesen Vertiefungen in die Magnetanordnungen einsetzbar sein.

Vorteilhaft kann also das Sensorelement an seinen beiden gegenüberliegenden Enden jeweils einen magnetischen oder magnetisierten Bereich aufweisen und die Antriebsvorrichtung kann zwei Magnetanordnungen mit jeweils zumindest zwei Elektromagneten aufweisen, wobei die Elektromagneten einer der Magnetanordnungen um eine der Ausnehmungen herum angeordnet sind und die Elektromagneten der anderen Magnetanordnungen um die andere der Ausnehmungen herum angeordnet sind.

Vorteilhaft kann eine Auswerteeinheit Teil der Durchflussmessvorrichtung sein, mit der aus der Kraft auf das Sensorelement oder der Verschiebung des Sensorelementes gegen eine Gegenkraft oder der durch das Sensorelement verursachten Kraft ein Durchfluss durch den Strömungskanal bestimmbar ist.

Erfindunsggemäß weist das Sensorelement zumindest einen magnetischen oder magnetisierten Bereich auf, und die Durchflussmessvorrichtung weist zumindest eine Magnetanordnung auf, die zumindest einen Elektromagneten aufweist, der zumindest eine Elektromagnet Teil der Antriebsvorrichtung sein, und der zumindest eine Elektromagnet mit einem Wechselstrom so beaufschlagbar sein, dass das Sensorelement zu der Rotation angetrieben wird, wobei die zumindest eine Magnetanordnung außerhalb des Strömungskanals angeordnet sein kann.

Im Folgenden soll das Messelement, das Teil der Durchflussmessvorrichtung ist, beschrieben werden. Das Messelement selbst ist dabei eingerichtet zur Verwendung als das Messelement in der oben beschriebenen Durchflussmessvorrichtung. Erfindungsgemäß weist das Messelement einen Strömungskanal mit einer zusammenhängenden Einlassöffnung und einer zusammenhängenden Auslassöffnung auf, für die das oben Gesagte gilt. Zusammenhängend bedeutet hierbei, dass eine Öffnungsfläche der jeweiligen Öffnung eine zusammenhängende Fläche ist, die nicht durchbrochen ist. Der Strömungskanal hat ein Strömungsvolumen umgebende zusammenhängende Oberfläche, die nur durch die Einlassöffnung und die Auslassöffnung unterbrochen ist. Das Messelement weist darüber hinaus ein in dem Strömungskanal angeordnetes Sensorelement auf. Das Messelement kann vorteilhaft so ausgestaltet sein, dass es in die Durchflussmessvorrichtung einsetzbar und aus dieser entnehmbar ist. Besonders vorteilhaft kann es auch als Einwegteil ausgebildet sein.

Besonders vorteilhaft ist, wenn die Oberfläche des Strömungskanals monolithisch ausgebildet ist, also in einem einzigen Prozessschritt geformt wird. Dies erlaubt eine kostengünstige Produktion, die insbesondere bei der Verwendung als Einwegelement vorteilhaft ist.

Vorteilhafterweise ist der Strömungskanal zumindest bereichsweise entlang seiner Strömungsachse zylindrisch, hat also kreisförmige Querschnitte senkrecht zu der Strömungsachse. Möglich sind jedoch auch Strömungskanäle mit anderen Geometrien, beispielsweise mit rechteckigen, quadratischen oder elliptischen Querschnitten. Die genannte Geometrie kann vorteilhaft überall dort realisiert sein, wo nicht beispielsweise die oben beschriebenen Vertiefungen vorhanden sind.

Das Sensorelement ist vorteilhafterweise zylindrisch oder kugelförmig ausgestaltet. Besonders bevorzugt ist dabei eine Kreiszylinderform, in der das Sensorelement einen kreisförmigen Querschnitt senkrecht zu seiner Rotationsachse hat. Besonders bevorzugt ist das Sensorelement vollständig kreiszylinderförmig.

Erfindungsgemäß wird außerdem ein Verfahren zum Messen eines Durchflusses gemäß Anspruch 11 angegeben. Es wird dabei der Durchfluss durch einen Strömungskanal eines Messelementes geleitet, wobei das Messelement den Strömungskanal mit einer zusammenhängenden Einlassöffnung und einer zusammenhängenden Auslassöffnung aufweist. Dabei hat der Strömungskanal eine ein Strömungsvolumen umgebende zusammenhängende Oberfläche, die nur durch die Einlassöffnung und die Auslassöffnung unterbrochen ist. Das Messelement weist außerdem ein in dem Strömungsvolumen angeordnetes Sensorelement auf. Für das Messelement und seine Komponenten gilt das oben zur Durchflussmessvorrichtung und das Messelement Gesagte analog.

Im erfindungsgemäßen Verfahren wird das Sensorelement zu einer Rotation um eine Drehachse angetrieben. Es wird dann eine Kraft auf das Sensorelement oder eine Verschiebung des Sensorelementes gegen eine Gegenkraft oder eine durch das Sensorelement verursachte Kraft gemessen und aus der Kraft oder der Verschiebung der Durchfluss bestimmt.

Erfindungsgemäß weist das Sensorelement zumindest einen magnetischen oder magnetisierten Bereich auf und wird dadurch zur Rotation angetrieben, dass der magnetische oder magnetisierte Bereich mit einem magnetischen Feld beaufschlagt wird. Vorteilhafterweise kann das magnetische Feld dabei ein zeitlich veränderliches Magnetfeld sein, das zeitlich veränderlich so auf den magnetisierten oder magnetischen Bereich des Sensorelementes wirkt, dass dieser rotiert. Beispielsweise kann das magnetische Feld um die Rotationsachse des Sensorelementes rotierend angelegt werden. Dies kann beispielsweise mit entsprechend angesteuerten Elektromagneten oder auch mittels bewegten Permanentmagneten erfolgen. Vorteilhaft kann das Sensorelement durch das Magnetfeld auch an einer bestimmten Position gehalten werden.

Vorteilhafterweise liegen Nord- und Südpol einander bezüglich der Rotationsachse des Sensorelementes gegenüber und die Magnetfeldlinien liegen vorteilhafterweise in nicht parallelen Winkeln zur Rotationsachse des Sensorelementes.

Erfindungsgemäß ist es bevorzugt, wenn das Sensorelement zu einer Rotation in nur eine Richtung angetrieben wird, besonders bevorzugt mit konstanter Winkelgeschwindigkeit. Hierdurch wird eine Messung mit zeitlich konstanter Genauigkeit erzielt. Vorteilhafterweise wird dabei die Achse, um die sich das Sensorelement dreht, konstant gehalten.

In einer vorteilhaften Ausgestaltung des Verfahrens kann ein Messbereich der Messung des Durchflusses dadurch verändert werden, dass eine Geschwindigkeit der Rotation des Sensorelements verändert wird. Insbesondere ist es möglich, bei sich verändernden Durchflüssen den Messbereich stets optimal zu halten, indem stets die am besten geeignete Rotationsgeschwindigkeit des Sensorelementes eingestellt wird.

Um das Sensorelement im Inneren des Strömungskanals zu halten, ist es besonders bevorzugt, zum Halten des Sensorelements ein magnetisches Wechselfeld durch zumindest einen Elektromagneten so zu erzeugen, dass das Sensorelement in einer vorgegebenen Position gehalten wird. Vorteilhafterweise kann das Sensorelement durch dasselbe Magnetfeld auch zur Rotation angeregt werden. Es ist jedoch auch möglich, für das Halten und das Drehen des Sensorelements unterschiedliche Magnetfelder, also von unterschiedlichen Magneten erzeugte Magnetfelder, einzusetzen.

In einer vorteilhaften Ausgestaltung der Erfindung kann eine Stromzufuhr zu dem zumindest einen Elektromagneten zeitabhängig so geregelt werden, dass das Sensorelement in der vorgegebenen Position gehalten wird. Es ist dann möglich, aus dem zugeführten zeitabhängigen Strom und/oder der angelegten zeitabhängigen Spannung auf die auf das Sensorelement wirkende Kraft zu schließen. Insbesondere kann vorteilhaft auf die Magnuskraft geschlossen werden. Die aktuelle Position des Sensorelements kann durch einen geeigneten Positionssensor, beispielsweise einen Abstandssensor, bestimmt werden. Die Stromzufuhr zu dem Elektromagneten kann hierbei aufgrund der durch den Positionssensor gemessenen Position geändert werden, so dass sich das Sensorelement zurück in eine Sollposition begibt und/oder in eine Sollorientierung ausrichtet.

Im erfindungsgemäßen Verfahren ist es optional auch möglich, aus der Kraft auf das Sensorelement oder aus der Verschiebung des Sensorelementes oder aus der durch das Sensorelement verursachten Kraft zumindest eine Materialeigenschaft des in dem Strömungskanal fließenden Fluids zu bestimmen, beispielsweise eine Dichte des Fluids und/oder eine Viskosität des Fluids.

Bevorzugterweise wird das erfindungsgemäße Verfahren mit einer Durchflussvorrichtung wie oben beschrieben ausgeführt und/oder mit einem wie oben beschriebenen Messelement.

Im Folgenden soll die Erfindung anhand einiger Figuren beispielhaft erläutert werden. Gleiche Bezugszeichnen kennzeichnen dabei gleiche oder entsprechende Merkmale. Die in den Beispielen beschriebenen Merkmale sind auch unabhängig von dem konkreten Beispiel realisierbar und zwischen den Beispielen kombinierbar.

Es zeigt
- Figur 1: eine perspektivische Ansicht einer erfindungsgemäßen Durchflussmessvorrichtung,
- Figur 2: einen Schnitt durch eine erfindungsgemäße Durchflussmessvorrichtung,
- Figur 3: einen Schnitt durch eine erfindungsgemäße Durchflussmessvorrichtung und
- Figur 4: eine Illustration des Magnuseffekts.

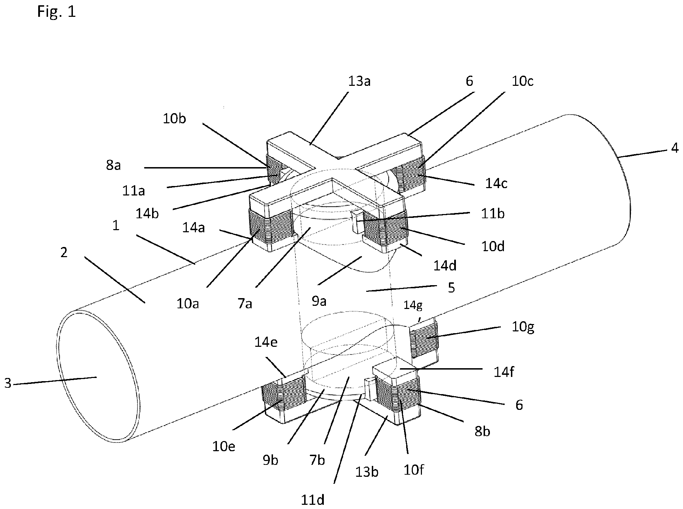

Figur 1 zeigt eine erfindungsgemäße Durchflussmessvorrichtung mit einem erfindungsgemäßen Messelement 1. Das Messelement 1 weist hierbei einen Strömungskanal 2 auf. Der Strömungskanal 2 hat hier einen bereichsweise kreisförmigen Querschnitt und ist daher bereichsweise kreiszylinderförmig. Im in Figur 1 gezeigten Beispiel weist der Strömungskanal 2 eine zusammenhängende Einlassöffnung 3 und eine zusammenhängende Auslassöffnung 4 auf. Im Beispiel weist der Strömungskanal genau eine Einlassöffnung 3 und genau eine Auslassöffnung 4 auf. Der Strömungskanal 2 weist hier eine zusammenhängende Oberfläche auf, welche ein Strömungsvolumen umgibt. Die Oberfläche des Strömungskanals ist nur durch die Einlassöffnung 3 und die Auslassöffnung 4 unterbrochen.

Das Messelement 1 weist außerdem ein in dem Strömungsvolumen angeordnetes Sensorelement 5 auf, das hier als Kreiszylinder ausgebildet ist. Im gezeigten Beispiel steht die Zylinderachse des Sensorelementes 5, die zugleich auch seine Rotationsachse ist, senkrecht zu einer Durchflussachse des Strömungskanals 2.

Neben dem Messelement 1 weist die in Figur 1 gezeigte Durchflussmessvorrichtung außerdem eine Antriebsvorrichtung 6 auf, mit der das Sensorelement 5 zu einer Rotation um seine Drehachse antreibbar ist. Erfindungsgemäß weist die Durchflussmessvorrichtung außerdem eine Kraftmessvorrichtung auf, die in Figur 1 nicht eingezeichnet ist, da sie eine elektronische Auswerteeinheit ist, die im in Figur 1 gezeigten Beispiel mit der Antriebsvorrichtung 6 elektrisch kontaktiert ist.

Im in Figur 1 gezeigten Beispiel wird das Sensorelement 5 mittels Magnetkraft im Strömungskanal 2 gehalten. Hierzu weist das Sensorelement zwei magnetische bzw. magnetisierte Bereiche 7a und 7b auf. Entsprechend weist die Durchflussmessvorrichtung zwei Magnetanordnungen 8a und 8b auf, die im gezeigten Beispiel Teil der Antriebsvorrichtung 6 sind.

Im in Figur 1 gezeigten Beispiel weist der Strömungskanal 2 zwei einander gegenüberliegende Vertiefungen 9a und 9b auf, die jeweils kreisförmige Querschnitte haben, wobei die Mittelpunkte der kreisförmigen Querschnitte der Vertiefungen 9a und 9b auf einer gemeinsamen Gerade liegen, die im gezeigten Beispiel koaxial ist zur Zylinderachse und Rotationsachse des zylinderförmigen Sensorelementes 5. Die Vertiefungen 9a und 9b sind auf ihren jeweils dem Strömungskanal abgewandten Seite durch kreisförmige Stirnflächen begrenzt. Die Gerade, welche die Mittelpunkte der Querschnitte der Vertiefungen 9a und 9b miteinander verbindet, steht im gezeigten Beispiel senkrecht zur Durchflussachse des Strömungskanals 2. Die Vertiefungen 9a und 9b sind symmetrisch zu der Strömungsachse des Strömungskanals 2 ausgestaltet und ihre Stirnflächen haben im gezeigten Beispiel von der Strömungsachse des Strömungskanals 2 den gleichen Abstand.

Die Länge des Sensorelementes 5 in Richtung seiner Rotationsachse ist größer als der Durchmesser des Strömungskanals 2. Das Sensorelement 5 greift daher mit seinen Enden in die Vertiefungen 9a und 9b ein. Im in Figur 1 gezeigten Beispiel sind die genannten magnetischen bzw. magnetisierten Bereiche 7a und 7b des Sensorelements in den Vertiefungen 9a und 9b angeordnet.

Die Magnetanordnungen 8a und 8b sind im gezeigten Beispiel außerhalb des Strömungskanals 2, also außerhalb des Strömungsvolumens angeordnet.

Die Magnetanordnungen 8a und 8b weisen im gezeigten Beispiel jeweils vier Elektromagneten 10a, 10b, 10c, 10d bzw. 10e, 10f, 10g und 10h auf. Die Elektromagneten 10a, 10b, 10c und 10d umgeben den ersten magnetischen oder magnetisierten Bereich 7a des Sensorelements, so dass dieser in einem Bereich angeordnet ist, in dem durch die Magnetanordnung 8a ein Magnetfeld mit einer solchen Feldstärke erzeugbar ist bzw. erzeugt wird, dass das Sensorelement 5 durch das Magnetfeld gehalten wird, besonders bevorzugt ohne die Oberflächen des Strömungskanals 2 zu berühren. Entsprechend ist der magnetisierte Bereich 7b in einem Bereich angeordnet, in dem durch die Elektromagneten 10e, 10f, 10g, 10h ein Magnetfeld mit einer solchen Feldstärke erzeugbar ist oder erzeugt wird, dass das Sensorelement 5 durch das Magnetfeld gehalten wird, vorzugsweise ohne die innere Oberfläche des Strömungskanals 2 zu berühren. Es ist hierbei ausreichend, dass die durch alle Magnetanordnungen 8a, 8b bzw. alle Magneten 10a bis 10h zusammen erzeugte Kraft ausreichend ist, das Sensorelement 5 in entsprechender Weise zu halten, selbst wenn eine der Magnetanordnungen 8a oder 8b alleine keine hierfür hinreichende Magnetkraft bewirkt.

Die Magnetanordnungen 8a und 8b liegen in Figur 1 einander bezüglich einer Ebene gegenüber, in welcher die Strömungsachse des Strömungskanals 2 verläuft. Jede der beiden Magnetanordnungen 8a und 8b weist vier Elektromagneten 10a, 10b, 10c, 10d bzw. 10e, 10f, 10g, 10h auf, die einander jeweils paarweise bezüglich der Rotationsachse des Sensorelements 5 gegenüberliegen. Es sei darauf hingewiesen, dass auch mehr oder weniger der Elektromagneten 10a bis 10h für jede der Magnetanordnungen 8a und 8b einsetzbar sind, wobei bevorzugt ist, dass jede der Magnetanordnungen 8a und 8b jeweils eine ungerade Anzahl von entsprechend angeordneten Magneten aufweist.

Die Magneten 10a, 10b, 10c, 10d sind im gezeigten Beispiel in gleichen Winkelabständen zueinander in einer gemeinsamen Ebene angeordnet, die senkrecht zur Rotationsachse des Sensorelements 5 steht. Entsprechend sind die Elektromagneten 10e bis 10h mit gleichen Winkelabständen zueinander in einer gemeinsamen Ebene angeordnet, die ebenfalls senkrecht zur Rotationsachse des Sensorelements 5 steht und parallel ist zu der Ebene, in der die Magneten der Magnetanordnung 8a angeordnet sind.

Die magnetischen oder magnetisierten Bereiche 7a und 7b des Sensorelements 5 liegen in Richtung der Rotationsachse des Sensorelements 5 gerade in jenen Bereichen vor, die von den Magneten 10a bis 10 h der Magnetanordnung 8a bzw. der Magnetanordnung 8b umgeben sind. Dabei liegen Nord- und Südpol jeweils einander bezüglich der Rotationsachse des Sensorelements 5 gegenüber.

Die Elektromagneten 10a bis 10h können im in Figur 1 gezeigten Beispiel mittels einer nicht gezeigten Leistungsversorgungsvorrichtung, die mit den Elektromagneten 10a bis 10h elektrisch und/oder elektromagnetisch verbunden ist, mit Leistung versorgt werden. Die Elektromagneten 10a bis 10h können Teil der Antriebsvorrichtung 6 sein. Werden sie mit einem Wechselstrom beaufschlagt, so kann dadurch das Sensorelement 5 zur Rotation angetrieben werden.

Die in Figur 1 gezeigte Durchflussmessvorrichtung weist außerdem vier Abstandssensoren 11a, 11b, 11c und 11d auf, die hier zwischen den Elektromagneten 10b, 10d, 10h bzw. 10f und der Vertiefung 9a bzw. 9b angeordnet sind. Die Abstandssensoren 11a, 11b, 11c, 11d können einen Abstand des Sensorelements 5 zu dem entsprechenden Abstandssensor 11a, 11b, 11c, 11d messen und daher Auskunft geben über die Lage des Sensorelements 5. Durch die Abstandssensoren 11a, 11b, 11c, 11d ist eine Verschiebung des Sensorelements 5 in Richtung senkrecht zur Durchflussrichtung im Strömungskanal 2 messbar. Es ist also gerade jene Verschiebung messbar, die das Sensorelement 5 durch Wirkung der Magnuskraft erfährt.

Die Durchflussmessvorrichtung kann vorteilhaft eine Regelvorrichtung aufweisen, welche die genannte Kraftmessvorrichtung bilden kann. Diese kann eingerichtet sein, den an die Elektromagneten 10a bis 10h abgegebenen Strom und/oder die an den Elektromagneten 10a bis 10h angelegte Spannung so zu regeln, dass das Sensorelement 5 in einer vorgegebenen Position gehalten wird, also beispielsweise so geregelt werden, dass der durch die Abstandssensoren 11a, 11b, 11c, 11d bestimmte Abstand ein Sollabstand ist. Fließt also ein Fluid im Strömungskanal 2, und wird das Sensorelement 5 zur Rotation angetrieben, so verschiebt es sich aufgrund der Magnuskraft in Richtung senkrecht zur Flussrichtung im Strömungskanal 2. Diese Verschiebung wird durch die Abstandssensoren 11a, 11b, 11c, 11d bestimmt. Es kann dann der an die Elektromagneten 10a bis 10h abgegebene Strom so eingestellt werden, dass der durch die Abstandssensoren 11a bis 11d bestimmte Abstand der Sollabstand wird. Wird nun der hierzu erforderliche Strom und/oder die angelegte Spannung zeitabhängig gemessen, so kann hieraus die Magnuskraft bestimmt werden und aus dieser der Durchfluss durch den Strömungskanal 2. Die Abstandssensoren 11a bis 11d können beispielsweise optische, kapazitive oder induktive Näherungssensoren sein. Es sei darauf hingewiesen, dass auch weitere Abstandssensoren vorgesehen sein können, die sich in Strömungsrichtung jeweils vor und/oder hinter dem Sensorelement befinden. Auf diese Weise kann eine Gesamtkraft, die eine Überlagerung der Strömungswiderstandskraft und der Magnuskraft, sowie gegebenenfalls externer Kräfte ist, bestimmt werden. Vorteilhaft kann außerdem zumindest ein Sensor zur Messung externer Kräfte und/oder Beschleunigungen wie zum Beispiel der Erdbeschleunigung, vorgesehen sein.

Die Durchflussmessvorrichtung kann außerdem eine in der Figur 1 nicht gezeigte Auswerteeinheit aufweisen, mit der aus der Kraft auf das Sensorelement oder aus der Verschiebung des Sensorelements gegen eine Gegenkraft oder aus der durch das Sensorelement verursachten Kraft ein Durchfluss durch den Strömungskanal 2 bestimmbar ist.

Vorteilhafterweise ist die Oberfläche des Strömungskanals 2, besonders bevorzugt zusammen mit der Oberfläche der Vertiefungen 9a und 9b monolithisch ausgebildet.

Das Messelement 1, aufweisend den Strömungskanal 2 mit den Vertiefungen 9a und 9b und das Sensorelement 5 können als Einwegelement ausgebildet sein. Als solches kann es dann in die restlichen Elemente der Durchflussmessvorrichtung, insbesondere die Antriebsvorrichtung 6 einsetzbar sein.

Im in Figur 1 gezeigten Beispiel weisen die Magnetanordnungen 8a und 8b jeweils Strukturen 13a bzw. 13b, beispielsweise aus Eisen, auf, über welche die Magnetfelder führbar sind. Darüberhinaus weist jeder der Elektromagneten 10a bis 10h auf seiner den Strukturen 13a bzw. 13b gegenüberliegenden Seite eine weitere Feldführungsstruktur 14a bis 14h auf, mit der das durch den entsprechenden Elektromagneten 10a bis 10h erzeugte Magnetfeld in geeigneter Weise an die magnetisierten Bereiche 7a bzw. 7b des Sensorelementes 5 führbar ist. Es können dabei die Strukturen 13a und 14a bis 14d einerseits sowie die Struktur 13b und die Strukturen 14e bis 14h aus einem gemeinsamen Eisenelement hergestellt sein, um das jeweils zwischen den Strukturen 13a, 13b und den Strukturen 14a bis 14h eine Spule als Elektromagnet 10a bis 10h gewickelt ist.

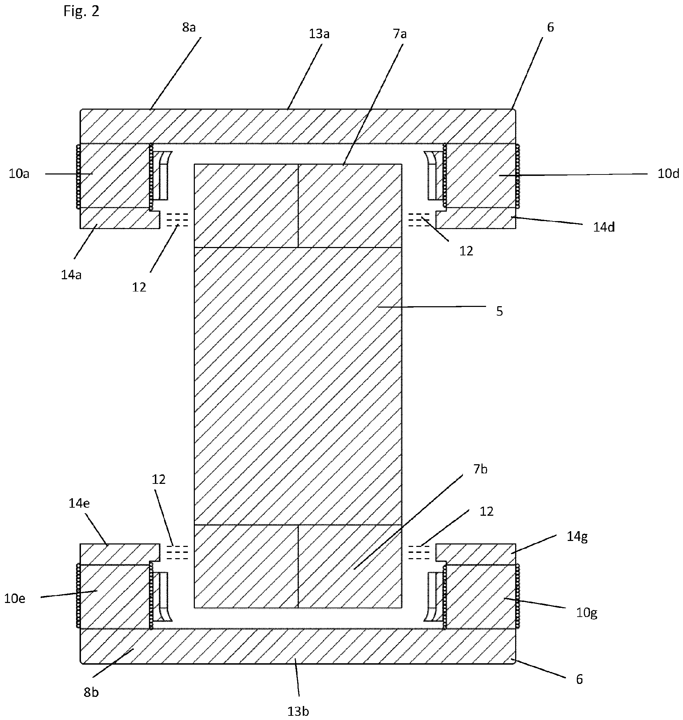

Figur 2 zeigt einen Schnitt durch die in Figur 1 gezeigte Durchflussmessvorrichtung, wobei jedoch der Strömungskanal 2 weggelassen wurde. Dabei ist die Zeichnungsebene so gewählt, dass die Strömungsachse des Strömungskanals 2 wie auch die Rotationsachse des Sensorelements 5 in der Zeichnungsebene liegt. Es können hierbei wiederum die Struktur 13a zusammen mit den Strukturen 14a und 14d aus einem gemeinsamen Element, beispielsweise aus Eisen, gebildet sein, das durch die Spulen 10a bzw. 10d als Elektromagneten umwickelt ist. Durch die Strukturen 14a und 14d zur Führung des Magnetfeldes 12 wird das Magnetfeld 12 in geeigneter Weise zu dem magnetisierten Bereich 7a des Sensorelements 5 geführt. Entsprechend kann auch die Magnetfeldführungsstruktur 13b aus einem gemeinsamen Eisenelement mit den Magnetfeldführungsstrukturen 14e und 14g (wie auch den Strukturen 14f und 14h, die in Figur 2 nicht gezeigt sind) ausgebildet sein, die durch die Spulen 10b und 10g als Elektromagneten umwickelt sind. Durch die Elemente 14e und 14g wird das Magnetfeld 12 in geeigneter Weise zu dem magnetisierten Bereich 7b des Sensorelements 5 geleitet. Für die in Figur 2 nicht gezeigten Magnetfeldführungsstrukturen 14b, 14d, 14h und 14f gilt das zu Figur 2 Gesagte analog. Die Magnetfelder 12 haben hier eine Feldstärke, die im Bereich des Sensorelements 5 so ist, dass die durch alle der Magneten 10a bis 10h erzeugten Magnetkräfte ausreichend sind, das Sensorelement 5 zu halten und ggf. zu Rotation anzuregen.

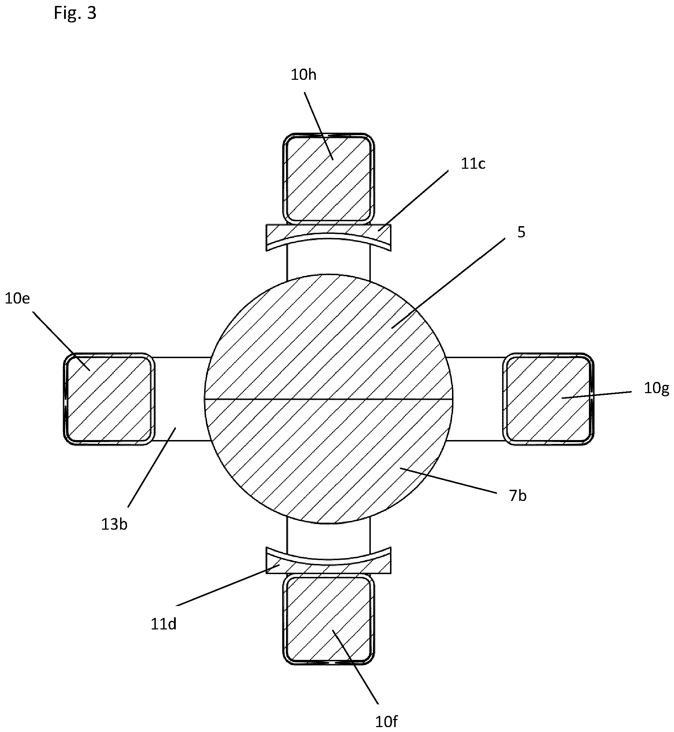

Figur 3 zeigt einen Schnitt durch die in Figur 1 gezeigte Durchflussmessvorrichtung mit Blickrichtung in Richtung der Rotationsachse des Sensorelements 5. Die Schnittebene verläuft dabei durch die Abstandssensoren 11c und 11d. Die Durchflussrichtung des nicht eingezeichneten Strömungskanals 2 verläuft hierbei von unten nach oben oder von oben nach unten. Wird das Sensorelement 5 durch die Elektromagneten 10a bis 10h zu Rotation angeregt, so wirkt eine Magnuskraft in Richtung senkrecht zur Strömungsrichtung, also in Fig. 3 von links nach rechts oder von rechts nach links. Durch diese verändert sich der Abstand zwischen dem Strömungselement 5 und den Näherungssensoren 11c und 11d. Die Näherungssensoren 11c und 11d können den Abstand messen und mittels der Kraftmessvorrichtung kann dann das durch die Elektromagneten 10a bis 10h erzeugte Magnetfeld so geändert werden, dass der durch die Abstandssensoren 11a bis 11d gemessene Abstand einen Sollwert annimmt.

Es ist vorteilhaft, wenn die Rotation und die Einstellung der Position des Sensorelements 5 in einem gemeinsamen Vorgang bewirkt werden. Da die magnetisierten Bereiche 7a und 7b sich drehen, ist es vorteilhaft, wenn das durch die Elektromagneten 10a bis 10h erzeugte Magnetfeld zu jedem Zeitpunkt so erzeugt wird, dass es in geeigneter Weise auf die magnetisierten Bereiche 7a bzw. 7b wirkt, um zum einen die Rotation zu bewirken und zum anderen das Sensorelement 5 in der vorgegebenen Position zu halten. Die Magneten 10a bis 10h werden also vorteilhafterweise jeweils mit einem variierenden Strom beaufschlagt, so dass sie zu jedem Zeitpunkt das geeignete Magnetfeld erzeugen. Der Stromfluss kann hier beispielsweise wie in einem Elektromotor geregelt werden.

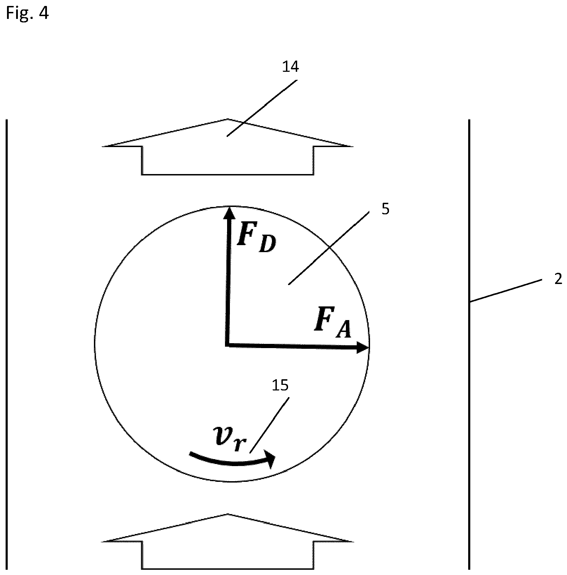

Figur 4 zeigt schematisch die Entstehung des Magnuseffekts. Figur 4 kann als Schnitt durch die in Figur 1 gezeigte Durchflussmessvorrichtung angesehen werden, wobei die Schnittebene senkrecht zur Rotationsachse bzw. Zylinderachse des Sensorelements 5 steht und die Strömungsachse des Strömungskanals 2 enthält. Das Sensorelement 5 wird zu einer Rotation 15 angeregt, während im Strömungskanal 2 ein Fluid mit dem Durchfluss 14 von unten nach oben strömt. Die Rotation 15 ist im gezeigten Beispiel dem Uhrzeigersinn entgegen gerichtet, so dass auf der linken Seite die Oberfläche des Sensorelements 5 das Fluid abbremst und auf der rechten Seite beschleunigt. Hierdurch sinkt der Druck aufgrund des Gesetzes von Bernoulli auf der rechten Seite und erhöht sich auf der linken Seite gegenüber einem mittleren Druck. Es kommt daher zu einer resultierenden Kraft F_{A} in Richtung der rechten Seite, der sog. "Magnuskraft". Es wirkt darüber hinaus auch eine Kraft F_{D} aufgrund des Strömungswiderstandes des Sensorelements 5 gegenüber dem Durchfluss 14.

Die Vorteile dieses Verfahrens liegen darin, dass die Strömungsgeschwindigkeit innerhalb eines hermetisch geschlossenen Strömungskanals gemessen werden kann, was auch den Einsatz mit korrosiven Medien ermöglicht. Die einfache Skalierbarkeit des Messbereiches kann einerseits durch geometrische Anpassungen des Sensorelementes und Strömungskanals, als auch durch die dynamische Anpassung der Rotationsgeschwindigkeit erfolgen, so dass sich der Sensor für die Bestimmung sehr kleiner und/oder dynamischer Durchflüsse eignet. Ein zusätzliches Alleinstellungsmerkmal stellt die Robustheit gegenüber kondensierenden Fluiden dar. Potentielles Kondensat in Form von Tröpfchen wird durch die Zentrifugalkraft schnell aus dem relevanten Messbereich gebracht. Weiterhin kann der Strömungskanal als Single-Use Bauteil hergestellt werden, während der technisch anspruchsvollere elektronische Teil des Aufbaus separat gefertigt und angebracht werden kann.

Die vorliegende Erfindung kann grundsätzlich überall dort eingesetzt werden, wo Gase oder Flüssigkeiten gefördert werden. Dies reicht von der Bestimmung des Gasflusses bei beatmeten Patienten bis hin zu Anwendungen in großtechnischen Chemie- und Bioprozessanlagen. Die einzigartige Robustheit bei der Messung von Gasströmen mit kondensierender Feuchte macht den Einsatz bei der Beatmung von Patienten besonders interessant. Der gekapselte Aufbau ermöglicht zudem den Einsatz bei der Förderung von Medien, bei der eine Kontamination unbedingt ausgeschlossen werden muss.

## Patentansprüche

1. Durchflussmessvorrichtung, aufweisend
ein Messelement (1), wobei das Messelement (1) aufweist:
einen Strömungskanal (2) mit einer zusammenhängenden Einlassöffnung (3) und einer zusammenhängenden Auslassöffnung (4)
wobei der Strömungskanal eine ein Strömungsvolumen umgebende zusammenhängende Oberfläche aufweist, die nur durch die Einlassöffnung (3) und die Auslassöffnung (4) unterbrochen ist,
und ein in dem Strömungsvolumen angeordnetes Sensorelement (5), wobei die Durchflussmessvorrichtung weiter aufweist:
eine Antriebsvorrichtung, mit der das Sensorelement (5) zu einer Rotation um eine Drehachse antreibbar ist, sowie
eine Kraftmessvorrichtung, die eingerichtet ist zum Messen von zumindest einem ausgewählt aus den folgenden Werten: einer Kraft auf das Sensorelement (5), einer von einer Kraft auf das Sensorelement (5) abhängigen Regelungsgröße, einer Verschiebung des Sensorelementes (5) gegen eine Gegenkraft, einer von einer Verschiebung des Sensorelementes (5) gegen eine Gegenkraft abhängigen Regelungsgröße, einer durch das Sensorelement (5) verursachten Kraft, und/oder einer von einer durch das Sensorelement (5) verursachten Kraft abhängigen Regelungsgröße,
**dadurch gekennzeichnet, dass** das Sensorelement (5) zumindest einen magnetischen oder magnetisierten Bereich (7a, 7b) aufweist, und die Durchflussmessvorrichtung zumindest eine Magnetanordnung aufweist, die zumindest einen Elektromagneten (10a-10h) aufweist, der zumindest eine Elektromagnet Teil der Antriebsvorrichtung ist, und der zumindest eine Elektromagnet mit einem Wechselstrom so beaufschlagbar ist, dass das Sensorelement zu der Rotation angetrieben wird, wobei die zumindest eine Magnetanordnung außerhalb des Strömungskanals angeordnet ist.

2. Durchflussmessvorrichtung nach dem vorhergehenden Anspruch, wobei das Sensorelement mittels Magnetkraft im Strömungskanal (2) gehalten wird oder haltbar ist,
wobei der zumindest eine magnetische oder magnetisierte Bereich des Sensorelements in einem Bereich angeordnet ist, in dem durch die zumindest eine Magnetanordnung (8a, 8b) ein Magnetfeld mit einer solchen Feldstärke erzeugbar ist oder erzeugt wird, dass das Sensorelement (5) durch das Magnetfeld gehalten wird, vorzugsweise ohne die Oberfläche des Strömungskanals (2) zu berühren.

3. Durchflussmessvorrichtung nach einem der vorhergehenden Ansprüche, weiter aufweisend einen externen Kraft- und/oder Beschleunigungssensor, wobei die Durchflussmessvorrichtung eingerichtet ist, mittels einer durch den externen Kraft- und/oder Beschleunigungssensor gemessenen Kraft oder Beschleunigung einen Betrag und/oder eine Richtung einer auf das Sensorelement wirkenden Magnuskraft aus einer durch die Kraftmessvorrichtung gemessenen Gesamtkraft zu berechnen.

4. Durchflussmessvorrichtung nach einem der Ansprüche 2 oder 3, weiter aufweisend eine Leistungsversorgungsvorrichtung, die mit dem zumindest einen Elektromagneten (10a-10h) elektrisch und/oder elektromagnetisch verbunden ist.

5. Durchflussmessvorrichtung nach dem vorhergehenden Anspruch, aufweisend zumindest zwei der Magnetanordnungen, die einander bezüglich einer Ebene gegenüberliegen, in der eine Durchflussachse des Strömungskanals (2) verläuft.

6. Durchflussmessvorrichtung nach einem der beiden vorhergehenden Ansprüche, weiter aufweisend eine Regelvorrichtung als die Kraftmessvorrichtung, die eingerichtet ist, einen von der Leistungsversorgungsvorrichtung an den zumindest einen Elektromagneten (10a-10h) abgegebenen Strom und/oder eine durch die Leistungsversorgungsvorrichtung an den zumindest einen Elektromagneten (10a-10h) angelegte Spannung zeitabhängig so zu regeln, dass das Sensorelement (5) in einer vorgegebenen Position festgehalten wird, und die eingerichtet ist, aus dem an den zumindest einen Elektromagneten (10a-10h) abgegebenen Strom und/oder der an den zumindest einen Elektromagneten (10a-10h) angelegten Spannung die Kraft auf das Sensorelement (5) und/oder die Verschiebung des Sensorelementes (5) und/oder die durch das Sensorelement (5) verursachte Kraft zu bestimmen.

7. Durchflussmessvorrichtung nach dem vorhergehenden Anspruch, wobei die Regelvorrichtung eingerichtet ist, den Strom und/oder die Spannung so zu regeln, dass das Sensorelement (5) in einem vorgegebenen Abstand zu einer Ebene festgehalten wird, in der eine Strömungsachse des Strömungskanals (2) verläuft und in der eine Drehachse des Sensorelements (5) bei Abwesenheit von Strömung im Strömungskanal (2) liegt, wobei die Regelvorrichtung außerdem eingerichtet ist, aus dem Strom und/oder der Spannung eine auf das Sensorelement (5) wirkende Magnuskraft als die Kraft oder als einen Anteil der Kraft auf das Sensorelement (5) zu bestimmen.

8. Durchflussmessvorrichtung nach einem der vorhergehenden Ansprüche,
wobei die Kraftmessvorrichtung zumindest einen Näherungssensor (11a-11d) aufweist, mit dem eine Verschiebung des Sensorelements (5) infolge der auf das Sensorelement (5) wirkenden Kraft messbar ist, wobei vorzugsweise der Näherungssensor (11a-11d) ein optischer, kapazitiver oder induktiver Näherungssensor (11a-11d) ist, wobei mit dem Näherungssensor (11a-11d) eine Verschiebung des Sensorelementes (5) und/oder eine Kraftkomponente auf das Sensorelement (5) und/oder eine durch das Sensorelement (5) verursachte Kraftkomponente in eine Richtung bestimmbar ist, die senkrecht zu einer Strömungsachse des Strömungskanals (2) steht.

9. Durchflussmessvorrichtung nach einem der vorhergehenden Ansprüche, wobei das Sensorelement (5) an seinen beiden Enden in Richtung seiner Drehachse jeweils einen magnetischen oder magnetisierten Bereich (7a, 7b) aufweist, und
wobei die Antriebsvorrichtung zwei Magnetanordnungen (8a, 8b) aufweist, die jeweils zumindest einen Elektromagneten (10a, 10b) aufweisen, wobei eine der Magnetanordnungen (8a, 8b) auf einen der magnetischen oder magnetisierten Bereiche (7a, 7b) des Sensorelementes (5) wirkt und die andere Magnetanordnung (8a, 8b) auf den anderen der magnetischen oder magnetisierten Bereiche (7a, 7b) des Sensorelementes (5) wirkt.

10. Durchflussmessvorrichtung nach einem der vorhergehenden Ansprüche,
wobei der Strömungskanal (2) in seiner das Strömungsvolumen umgebenden Oberfläche zwei bezüglich einer Strömungsachse des Strömungskanals gegenüberliegende Vertiefungen (9a, 9b) aufweist, wobei das Sensorelement (5) mit gegenüberliegenden Enden jeweils in einer der Vertiefungen (9a, 9b) angeordnet ist,
wobei das Sensorelement (5) an seinen beiden gegenüberliegenden Enden jeweils einen magnetischen oder magnetisierten Bereich (7a, 7b) aufweist, und
wobei die Antriebsvorrichtung zwei Magnetanordnungen (8a, 8b) mit jeweils zumindest zwei Elektromagneten (10a, 10b) aufweist, wobei die Elektromagneten (10a, 10b) einer der Magnetanordnungen (8a, 8b) um eine der Ausnehmungen herum angeordnet sind und die die Elektromagneten (10a, 10b) der anderen Magnetanordnung (8a, 8b) um die andere der Ausnehmungen herum angeordnet sind.

11. Verfahren zum Messen eines Durchflusses,
wobei der Durchfluss durch einen Strömungskanal (2) eines Messelementes geleitet wird,
wobei das Messelement aufweist:
einen Strömungskanal (2) mit einer zusammenhängenden Einlassöffnung (3) und einer zusammenhängenden Auslassöffnung (4),
wobei der Strömungskanal (2) eine ein Strömungsvolumen umgebende zusammenhängende Oberfläche aufweist, die nur durch die Einlassöffnung (3) und die Auslassöffnung (4) unterbrochen ist,
und ein in dem Strömungsvolumen angeordnetes Sensorelement (5), wobei das Sensorelement (5) zu einer Rotation um eine Drehachse angetrieben wird,
eine Kraft auf das Sensorelement (5) oder eine Verschiebung des Sensorelementes (5) gegen eine Gegenkraft oder eine durch das Sensorelement (5) verursachte Kraft gemessen wird und aus der Kraft oder der Verschiebung der Durchfluss bestimmt wird, **dadurch gekennzeichnet, dass** das Sensorelement zumindest einen magnetischen oder magnetisierten Bereich aufweist, und
die Durchflussmessvorrichtung zumindest eine Magnetanordnung aufweist, die zumindest einen Elektromagneten aufweist, der zumindest eine Elektromagnet Teil der Antriebsvorrichtung ist, und der zumindest eine Elektromagnet mit einem Wechselstrom so beaufschlagt wird, dass das Sensorelement zu der Rotation angetrieben wird, wobei die zumindest eine Magnetanordnung außerhalb des Strömungskanals angeordnet ist.

12. Verfahren nach dem vorhergehenden Anspruch, wobei ein Messbereich der Messung des Durchflusses dadurch verändert wird, dass eine Geschwindigkeit der Rotation des Sensorelementes (5) verändert wird.

13. Verfahren nach einem der Ansprüche 11 oder 12,
wobei zum Halten des Sensorelements (5) durch zumindest einen Elektromagneten (10a-10h) ein magnetisches Wechselfeld so erzeugt wird, dass das Sensorelement (5) in einer vorgegeben Position gehalten wird,
wobei eine Stromzufuhr zu dem zumindest einen Elektromagneten (10a-10h) zeitabhängig so geregelt wird, dass das Sensorelement (5) in der vorgegebenen Position gehalten wird und aus dem zugeführten zeitabhängigen Strom und der angelegten zeitabhängigen Spannung auf die auf das Sensorelement (5) wirkende Kraft, vorzugsweise die auf das Sensorelement (5) wirkende Magnuskraft, geschlossen wird.

14. Verfahren nach einem der Ansprüche 11 bis 13, wobei aus der Kraft auf das Sensorelement oder aus der Verschiebung des Sensorelementes (5) oder aus der durch das Sensorelement (5) verursachten Kraft zumindest eine Materialeigenschaft des Fluids, vorzugsweise eine Dichte und/oder eine Viskosität des Fluids bestimmt wird.

## Claims

1. A flowmeter comprising
a measuring element (1), wherein the measuring element (1) comprises:
a flow channel (2) with a continuous inlet opening (3) and a continuous outlet opening (4),
wherein the flow channel has a continuous surface which surrounds a flow volume and which is interrupted only by the inlet opening (3) and the outlet opening (4),
and a sensor element (5) arranged in the flow volume,
wherein the flowmeter further comprises:
a drive device, by means of which the sensor element (5) may be driven to rotate about a rotation axis, and also
a force-measuring device, which is configured to measure at least one value selected from the following values: a force on the sensor element (5), a control variable dependent on a force on the sensor element (5), a displacement of the sensor element (5) against a counter force, a control variable dependent on a displacement of the sensor element (5) against a counter force, a force caused by the sensor element (5), and/or a control variable dependent on a force caused by the sensor element (5),
**characterized in that** the sensor element (5) has at least one magnetic or magnetized region (7a, 7b), and the flowmeter has at least one magnet assembly, which comprises at least one electromagnet (10a-10h), the at least one electromagnet is part of the drive device, and the at least one electromagnet may be supplied with an alternating current so that the sensor element is driven to rotate, wherein the at least one magnet assembly is arranged outside the flow channel.

2. The flowmeter according to the preceding claim, wherein the sensor element is held or is holdable in the flow channel (2) by means of magnetic force,
wherein the at least one magnetic or magnetized region of the sensor element is arranged in a region in which, by means of the at least one magnet assembly (8a, 8b) a magnetic field is generatable or generated that has such a field strength that the sensor element (5) is held by the magnetic field, preferably without touching the surface of the flow channel (2).

3. The flowmeter according to any one of the preceding claims, further comprising an external force and/or acceleration sensor, wherein the flowmeter is configured to calculate an absolute value and/or a direction of a Magnus force acting on the sensor element from a total force measured by the force-measuring device by means of a force or acceleration measured by the external force and/or acceleration sensor.

4. The flowmeter according to any one of claims 2 or 3,
further comprising a power supply device which is electrically and/or electromagnetically connected to the at least one electromagnet (10a-10h).

5. The flowmeter according to the preceding claim, comprising at least two of the magnet assemblies, which are arranged opposite one another in relation to a plane in which a flow axis of the flow channel (2) runs.

6. The flowmeter according to any one of the two preceding claims, further comprising a control device as the force-measuring device, which is configured to control time-dependently a current delivered by the power supply device to the at least one electromagnet (10a-10h) and/or a voltage applied by the power supply device to the at least one electromagnet (10a-10h), such that the sensor element (5) is fixed in a predefined position, and which is configured to determine the force on the sensor element (5) and/or the displacement of the sensor element (5) and/or the force caused by the sensor element (5) from the current delivered to the at least one electromagnet (10a-10h) and/or the voltage applied to the at least one electromagnet (10a-10h).

7. The flowmeter according to the preceding claim,
wherein the control device is configured to control the current and/or the voltage such that the sensor element (5) is held at a predefined distance from a plane in which a flow axis of the flow channel (2) runs and in which a rotation axis of the sensor element (5) lies in the absence of any flow in the flow channel (2), wherein the control device is additionally configured to determine, from the current and/or the voltage, a Magnus force acting on the sensor element (5) as the force or as a proportion of the force on the sensor element (5).

8. The flowmeter according to any one of the preceding claims,
wherein the flowmeter comprises at least one proximity sensor (11a-11d), by means of which a displacement of the sensor element (5) as a result of the force acting on the sensor element (5) may be measured, wherein the proximity sensor (11a-11d) is preferably an optical, capacitive or inductive proximity sensor (11a-11d), wherein a displacement of the sensor element (5) and/or a force component on the sensor element (5) and/or a force component caused by the sensor element (5) in a direction that is perpendicular to a flow axis of the flow channel (2) may be determined by means of the proximity sensor (11a-11d).

9. The flowmeter according to any one of the preceding claims, wherein the sensor element (5) has, at each of its two ends, in the direction of its rotation axis, a magnetic or magnetized region (7a, 7b), and
wherein the drive device has two magnet assemblies (8a, 8b), which each comprise at least one electromagnet (10a, 10b), wherein one of the magnet assemblies (8a, 8b) acts on one of the magnetic or magnetized regions (7a, 7b) of the sensor element (5) and the other magnet assembly (8a, 8b) acts on the other of the magnetic or magnetized regions (7a, 7b) of the sensor element (5).

10. The flowmeter according to any one of the preceding claims,
wherein the flow channel (2), in its surface surrounding the flow volume, has two indentations (9a, 9b) arranged oppositely with respect to a flow axis of the flow channel,
wherein the sensor element (5) is arranged with opposite ends in one each of the indentations (9a, 9b),
wherein the sensor element (5) has a magnetic or magnetized region (7a, 7b) at each of its two opposite ends, and
wherein the drive device has two magnet assemblies (8a, 8b) each comprising at least two electromagnets (10a, 10b), wherein the electromagnets (10a, 10b) of one of the magnet assemblies (8a, 8b) are arranged around one of the recesses and the electromagnets (10a, 10b) of the other magnet assembly (8a, 8b) are arranged around the other of the recesses.

11. A method for measuring a flow rate,
wherein the flow is conducted through a flow channel (2) of a measuring element,
wherein the measuring element comprises:
a flow channel (2) with a continuous inlet opening (3) and a continuous outlet opening (4),
wherein the flow channel (2) has a continuous surface which surrounds a flow volume and which is interrupted only by the inlet opening (3) and the outlet opening (4),
and a sensor element (5) arranged in the flow volume,
wherein the sensor element (5) is driven to rotate about a rotation axis,
a force on the sensor element (5) or a displacement of the sensor element (5) against a counter force or a force caused by the sensor element (5) is measured, and the flow rate is determined from the force or the displacement, **characterized in that** the sensor element has at least one magnetic or magnetized region, and
the flowmeter comprises at least one magnet assembly, which comprises at least one electromagnet, which at least one electromagnet is part of the drive device, and the at least one electromagnet is supplied with an alternating current such that the sensor element is driven to rotate, wherein the at least one magnet assembly is arranged outside the flow channel.

12. The method according to the preceding claim, wherein the measuring range of the measurement of the flow rate is altered by changing the speed of rotation of the sensor element (5).

13. The method according to any one of claims 11 or 12,
wherein, to hold the sensor element (5) by at least one electromagnet (10a-10h), a magnetic alternating field is generated such that the sensor element (5) is held in a predefined position,
wherein a current feed to the at least one electromagnet (10a-10h) is controlled time-dependently so that the sensor element (5) is held in the predefined position and the force acting on the sensor element (5), preferably the Magnus force acting on the sensor element (5), is concluded from the supplied time-dependent current and the applied time-dependent voltage.

14. The method according to any one of claims 11 to 13, wherein at least one material property of the fluid, preferably the density and/or the viscosity of the fluid, is determined from the force on the sensor element or from the displacement of the sensor element (5) or from the force caused by the sensor element (5).

## Revendications

1. Dispositif de mesure de débit, présentant
un élément de mesure (1), dans lequel l'élément de mesure (1) présente :
un canal d'écoulement (2) avec un orifice d'entrée (3) connexe et un orifice de sortie (4) connexe,
dans lequel le canal d'écoulement présente une surface connexe qui entoure un volume d'écoulement et n'est interrompue que par l'orifice d'entrée (3) et l'orifice de sortie (4),
et un élément de détection (5) agencé dans le volume d'écoulement,
dans lequel le dispositif de mesure de débit présente en outre :
un dispositif d'entraînement avec lequel l'élément de détection (5) peut être entraîné en rotation autour d'un axe de rotation, et
un dispositif de mesure de force conçu pour mesurer au moins une des valeurs ci-dessous : une force exercée sur l'élément de détection (5), une grandeur de régulation dépendant d'une force exercée sur l'élément de détection (5), un déplacement de l'élément de détection (5) à l'encontre d'une force antagoniste, une grandeur de régulation dépendant d'un déplacement de l'élément de détection (5) à l'encontre d'une force antagoniste, une force exercée par l'élément de détection (5), et/ou une grandeur de régulation dépendant d'une force exercée par l'élément de détection (5),
**caractérisé en ce que** l'élément de détection (5) présente au moins une région magnétique ou magnétisée (7a, 7b), et le dispositif de mesure de débit présente au moins un agencement d'aimants présentant au moins un électro-aimant (10a à 10h), le au moins un électro-aimant fait partie du dispositif d'entraînement, et le au moins un électro-aimant peut être soumis à un courant alternatif de sorte que l'élément de détection est entraîné en rotation, dans lequel le au moins un agencement d'aimants est agencé à l'extérieur du canal d'écoulement.

2. Dispositif de mesure de débit selon la revendication précédente, dans lequel l'élément de détection est retenu ou peut être retenu dans le canal d'écoulement (2) au moyen d'une force magnétique,
dans lequel l'au moins une région magnétique ou magnétisée de l'élément de détection est située dans une région au sein de laquelle un champ magnétique, d'une intensité de champ telle que l'élément de détection (5) est retenu par le champ magnétique, de manière préférée sans toucher la surface du canal d'écoulement (2), peut être généré ou est généré par le au moins un agencement magnétique (8a, 8b).

3. Dispositif de mesure de débit selon l'une quelconque des revendications précédentes, comprenant en outre un capteur de force et/ou d'accélération externe, dans lequel le dispositif de mesure de débit est conçu pour, à l'aide d'une force ou d'une accélération mesurée par le capteur de force et/ou d'accélération externe, calculer une quantité et/ou une direction d'une force magnétique agissant sur l'élément de détection à partir d'une force totale mesurée par le dispositif de mesure de force.

4. Dispositif de mesure de débit selon l'une quelconque des revendications 2 ou 3,
présentant en outre un dispositif d'alimentation électrique relié électriquement et/ou électromagnétiquement à l'au moins un électro-aimant (10a à 10h).

5. Dispositif de mesure de débit selon la revendication précédente, présentant au moins deux des agencements magnétiques qui sont opposés l'un à l'autre par rapport à un plan dans lequel s'étend un axe de débit du canal d'écoulement (2).

6. Dispositif de mesure de débit selon l'une quelconque des deux revendications précédentes, présentant en outre un dispositif de régulation sous la forme du dispositif de mesure de force, qui est conçu pour réguler, en fonction du temps, un courant délivré par le dispositif d'alimentation électrique à l'au moins un électro-aimant (10a à 10h) et/ou une tension appliquée par le dispositif d'alimentation électrique à l'au moins un électro-aimant (10a à 10h) de sorte que l'élément de détection (5) est maintenu dans une position prédéterminée, et qui est conçu pour déterminer, à partir du courant délivré à l'au moins un électro-aimant (10a à 10h) et/ou de la tension appliquée à l'au moins un électro-aimant (10a à 10h), la force exercée sur l'élément de détection (5) et/ou le déplacement de l'élément de détection (5) et/ou la force exercée par l'élément de détection (5).

7. Dispositif de mesure de débit selon la revendication précédente,
dans lequel le dispositif de régulation est conçu pour réguler le courant et/ou la tension de manière à maintenir l'élément de détection (5) à une distance prédéterminée d'un plan au sein duquel s'étend un axe d'écoulement du canal d'écoulement (2) et au sein duquel se situe un axe de rotation de l'élément de détection (5) en l'absence d'écoulement dans le canal d'écoulement (2), dans lequel le dispositif de régulation est également conçu pour déterminer, à partir du courant et/ou de la tension, une force magnétique agissant sur l'élément de détection (5) en tant que force ou en tant que fraction de la force exercée sur l'élément de détection (5).

8. Dispositif de mesure de débit selon l'une quelconque des revendications précédentes,
dans lequel le dispositif de mesure de force présente au moins un capteur de proximité (11a à 11d), avec lequel un déplacement de l'élément de détection (5) en raison de la force agissant sur l'élément de détection (5) peut être mesuré, dans lequel de manière préférée le capteur de proximité (11a à 11d) est un capteur de proximité (11a à 11d) optique, capacitif ou inductif, dans lequel un déplacement de l'élément de détection (5) et/ou une composante de force exercée sur l'élément de détection (5) et/ou une composante de force exercée par l'élément de détection (5) dans une direction perpendiculaire à un axe d'écoulement du canal d'écoulement (2) peut être déterminé(e) avec le capteur de proximité (11a à 11d).

9. Dispositif de mesure de débit selon l'une quelconque des revendications précédentes, dans lequel l'élément de détection (5) présente respectivement une région magnétique ou magnétisée (7a, 7b) au niveau de ses deux extrémités, dans le sens de son axe de rotation, et
dans lequel le dispositif d'entraînement présente deux agencements d'aimants (8a, 8b) présentant respectivement au moins un électro-aimant (10a, 10b), dans lequel un des agencements d'aimants (8a, 8b) agit sur une des régions magnétiques ou magnétisées (7a, 7b) de l'élément de détection (5) et l'autre agencement d'aimants (8a, 8b) agit sur l'autre des régions magnétiques ou magnétisées (7a, 7b) de l'élément de détection (5).

10. Dispositif de mesure de débit selon l'une quelconque des revendications précédentes,
dans lequel le canal d'écoulement (2) présente, dans sa surface entourant le volume d'écoulement, deux renfoncements (9a, 9b) opposés par rapport à un axe d'écoulement du canal d'écoulement,
dans lequel des extrémités opposées de l'élément de détection (5) sont agencées respectivement dans un des renfoncements (9a, 9b),
dans lequel l'élément de détection (5) présente respectivement une région magnétique ou magnétisée (7a, 7b) au niveau de ses deux extrémités opposées, et
dans lequel le dispositif d'entraînement présente deux agencements d'aimants (8a, 8b) avec respectivement au moins deux électro-aimants (10a, 10b), dans lequel les électro-aimants (10a, 10b) d'un des agencements d'aimants (8a, 8b) sont agencés autour d'un des évidements et les électro-aimants (10a, 10b) de l'autre agencement d'aimants (8a, 8b) sont agencés autour de l'autre évidement.

11. Procédé de mesure d'un débit,
dans lequel le débit est guidé par un canal d'écoulement (2) d'un élément de mesure,
dans lequel l'élément de mesure présente :
un canal d'écoulement (2) avec un orifice d'entrée connexe (3) et un orifice de sortie connexe (4),
dans lequel le canal d'écoulement (2) présente une surface connexe entourant un volume d'écoulement et qui n'est interrompue que par l'orifice d'entrée (3) et l'orifice de sortie (4),
et un élément de détection (5) agencé dans le volume d'écoulement,
dans lequel l'élément de détection (5) est entraîné en rotation autour d'un axe de rotation,
une force exercée sur l'élément de détection (5) ou un déplacement de l'élément de détection (5) à l'encontre d'une force antagoniste ou une force exercée par l'élément de détection (5) est mesuré(e) et le débit est déterminé à partir de ladite force ou dudit déplacement, **caractérisé en ce que** l'élément de détection présente au moins une région magnétique ou magnétisée, et
le dispositif de mesure de débit présente au moins un agencement d'aimants qui présente au moins un électro-aimant, le au moins un électro-aimant fait partie du dispositif d'entraînement, et le au moins un électro-aimant est soumis à un courant alternatif de sorte que l'élément de détection est entraîné en rotation, dans lequel le au moins un agencement d'aimants est agencé à l'extérieur du canal d'écoulement.

12. Procédé selon la revendication précédente, dans lequel une plage de mesure de la mesure du débit est modifiée en modifiant une vitesse de rotation de l'élément de détection (5).

13. Procédé selon l'une quelconque des revendications 11 ou 12,
dans lequel un champ magnétique alternatif est généré par au moins un électro-aimant (10a à 10h) afin de retenir l'élément de détection (5) de sorte que l'élément de détection (5) est retenu dans une position prédéterminée,
dans lequel une alimentation en courant vers le au moins un électro-aimant (10a à 10h) est régulée en fonction du temps de sorte que l'élément de détection (5) est retenu dans la position prédéterminée et de sorte que la force agissant sur l'élément de détection (5), de manière préférée la force magnétique agissant sur l'élément de détection (5), est déterminée à partir du courant fourni en fonction du temps et de la tension appliquée en fonction du temps.

14. Procédé selon l'une quelconque des revendications 11 à 13, dans lequel au moins une propriété matérielle du fluide, de manière préférée une densité et/ou une viscosité du fluide, est déterminée à partir de la force exercée sur l'élément de détection ou du déplacement de l'élément de détection (5) ou de la force exercée par l'élément de détection (5).
